# EUROPÄISCHE PATENTSCHRIFT

(11) **EP 0 455 994 B1**
(45) Veröffentlichungstag und Bekanntmachung des Hinweises auf die Patenterteilung: **27.08.1997**
(21) Anmeldenummer: 91105564.8
(22) Anmeldetag: 09.04.1991
(51) Int. Cl.: E21B 4/00, E21B 7/24, E21B 10/08

(54) **Exzenterantrieb für radialschwingende Walzen, Rollen und Fräsbohrwerkzeuge**
Eccentric drive for radially oscillating rollers, rolling cutters and milling drilling tools
Entraînement excentrique pour rouleaux, molettes et outils de forage, fraiseurs à oscillation latérale

(30) Priorität: 09.04.1990 CH 1205/90
(43) Veröffentlichungstag der Anmeldung: 13.11.1991
(73) Patentinhaber: Bechem, Hannelore, D-58093 Hagen (DE)
(72) Erfinder: Bechem, Ulrich, W-5800 Hagen 1 (DE); Lenzen, Dieter, W-5860 Letmathe (DE)

(56) Entgegenhaltungen:
- EP-A- 0 329 915
- EP-A- 0 352 979
- WO-A-89/00235
- WO-A-89/01837
- US-A- 4 736 987

## Beschreibung

Es gibt diverse Systeme, Rollen- oder Fräsbohrwerkzeuge zu aktivieren, d.h. mit Schlagimpulsen zu versehen und schlagend arbeiten zu lassen. Hierdurch werden die erforderlichen Andruckkräfte auf weit unter 10% reduziert und die Bohr- / Abtragleistungen - besonders im Hartgestein - erheblich erhöht und ist die Verwendung wesentlich leichterer Maschinen möglich.

In der Patentanmeldung WO A89/018-37 ist eine Walze / Kugel beschrieben, die exzenterschlagüberlagert wird, die ausschließlich angetrieben fräst. Beim Aktivieren mit dieser Technik ergeben sich Schwingungsprobleme - u.a. auch extrem harte Prellschläge. Durch die in dieser neuen Anmeldung beanspruchten Systeme mit Exzenteraktivierung und insbesondere mit dynamischer Auswuchtung werden diese Nachteile eliminiert. Weitere Besonderheiten dieser Erfindung zum Bearbeiten von Materialien liegen u.a. darin, das System als schlagendes Rollenbohrwerkzeug exzenterinduziert eigenangetrieben oder exzenterinduziert gesondert angetrieben als aktiviertes Fräsabtragwerkzeug zum Einsatz bringen zu können.

Beispiel: Die Exzenterwelle wird mit 3.000 U/min angetrieben, der Exzenter hat eine Amplitude von 5 mm und die Hülse resp. das Werkzeug läuft exzenterinduziert radial schlagend mit nur 100 U/min auf dem Material ab; die Gegengewichte sind so angeordnet, bemessen und eingestellt, daß sie die Hülse mit Werkzeugen dynamisch auswuchten können.

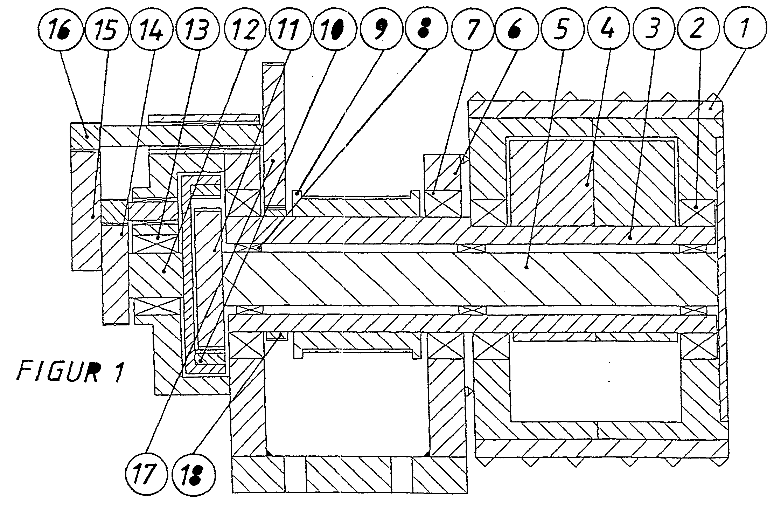

In jeweils nur einem Ausführungsbeispiel zeigt die Figur 1 in 1 eine mit Werkzeugen bestückte - in den Lagern 2 auf dem Exzenter 3 drehend gelagerte radial schwingende Hülse mit Rollenbohrwerkzeugen, Fräspicken, Schneidscheiben oder dgl. Diese Hülse kann auch halb / -kugelig ausgebildet und auch an ihrer Frontseite mit Bohrwerkzeugen versehen sein, so daß sie auch als Pilot- oder Schlitzbohrer arbeitet. 4 sind die am Exzenter justierbaren Gegengewichte bis hin zur dynamischen Auswuchtung. 5 ist die für einen langsam drehenden Antrieb der Hülse erforderliche Welle, die mit 1 kraftschlüssig verbunden ist. 6 ist einer der Halter mit den Lagern 7, in denen der andere Teil der Exzenterwelle / Hülse 3 drehend gelagert ist. 8 sind die bei dieser Ausführung erforderlichen Lager für die Antriebswelle. Diese Antriebswelle kann aber vorne und hinten mit einem Kardangelenk versehen sein - für direkten motorischen Antrieb. 9 ist der Antrieb der schnellaufenden Exzenterwelle - als Motor ausgebildet oder wie dargestellt über (Zahn-) Keilriemen. In einer gesonderten Ausführung des Untersetzungsgetriebes ist 10 der Innenzahnkranz, in welchem der an der Antriebswelle 5 befestigte Außenzahnkranz 11 exzentrisch abläuft und dadurch die Welle 5 in etwa 20:1 untersetzt antreibt. In einer besonderen Ausführung ist der Innenzahnkranz 10 mit einem Zapfen 12 versehen, der in 13 drehend gelagert ist; langsam mitdrehend kann somit / damit die Drehzahl der Hülse mit Werkzeugen gebremst reduziert werden - angetrieben erhöht werden. Die erfindungsgemäße Kraftrückübertragung mit gleichzeitiger Möglichkeit einer Drehzahlbestimmmung für die Hülse erfolgt beispielsweise über die Zahnräder 14, 15, 16, 17 und 18, ist aber u.a. auch hydraulisch möglich.

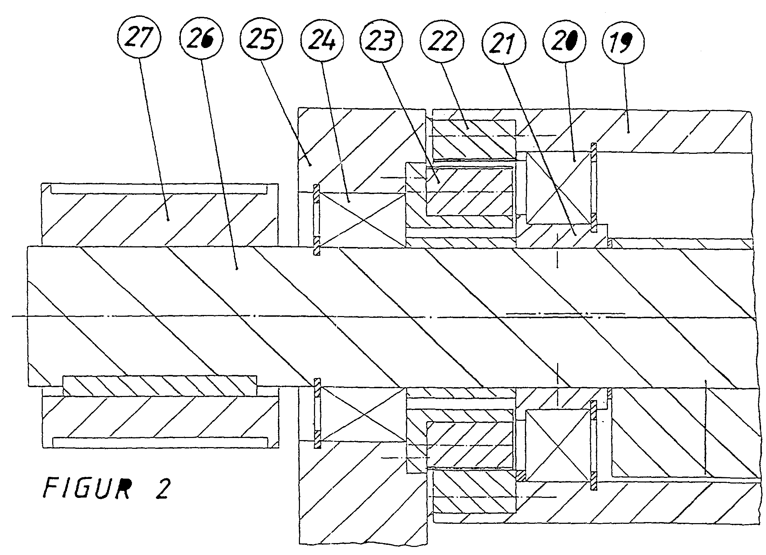

In der Figur 2, einem anderen Antriebssystem für eine auch zweiseitig gelagerte angetriebene Welle 26 mit Hülse und Werkzeugen ist 19 die Hülse, die mit den Lagern 20 auf der Exzenterwelle 21 frei drehend gelagert ist. 22 ist bei dieser Ausführung der langsam drehende an der Hülse befestigte Innenzahnkranz, der um den gestellfest angeordneten Außenzahnkranz 23 exzentrisch rotiert. 24 sind die Lager im Halter 25 der schnell drehend angetriebenen Welle 26 mit justier- und dynamisch auswuchtbaren Kontergewichten im Inneren der Hülse 19 - gemäß Figur 1. 27 stellt eine Keilriemenscheibe dar - vorzugsweise wird aber ein schnelldrehender Motor direkt angeflauscht.

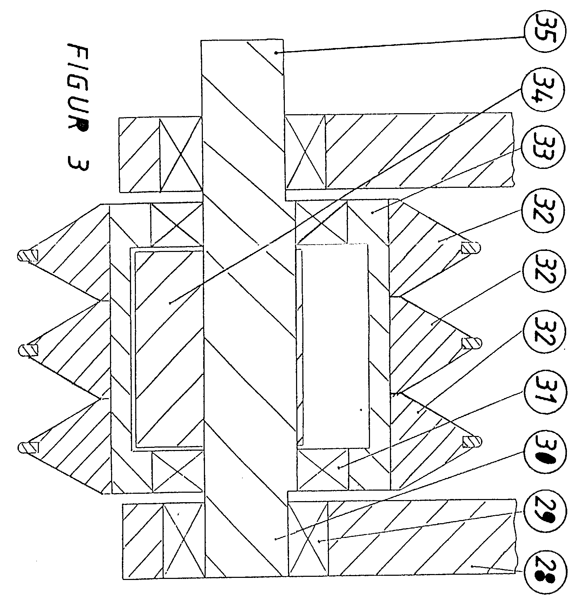

In Figur 3 ist ein über 35 nur exzenteraktiviertes nicht fremd angetriebenes Rollenbohrwerkzeug dargestellt - in dieser Ausführung zweiseitig gehalten. 28 ist einer der Halter mit den Lagern 29 für die Exzenterwelle 30 mit den Lagern 31 für die Hülse. 32 sind beispielsweise 3 Disken mit Hartmetallstiften, die auf der exzentrisch radial schlagenden Hülse 33 montiert sind und über die justier- und ggf. dynamisch auswuchtbaren Gegengewichte 34 ausgewuchtet werden. 35 ist die angetriebene schnellaufende Exzenterwelle.

Um die gleichen Bohrleistungen im Hartgestein zu erzielen, wie beim konventionellen Bohren mit 10 bis 20 Tonnen / Diske, liegt der bei der erfindungsgemäßen Technik erforderliche Anpressdruck bei nur wenigen 100 kg - ein enormer Vorteil. Außerdem rollt das Rollenbohrwerkzeug bei dieser erfindungsgemäßen Technik selbständig langsam rotierend gegenläufig zur Kurbelwellendrehrichtung auf dem Gestein und dgl. ab - verschleißt damit gleichmäßig und / oder kann dadurch auf der Stelle bohren. Eine Mitlaufsperre, Ratsche oder dgl. ist vorzusehen, um das schnelle Mitdrehen der Hülse in Drehrichtung der Exzenterwelle zu verhindern - oder ein Hilfsantrieb, um das Weiterdrehen des Werkzeugs bei Klüften oder dgl. zu gewährleisten.

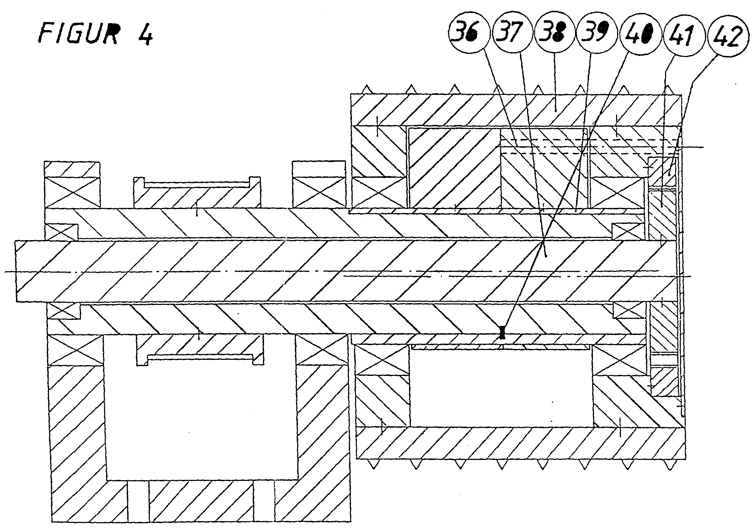

In Figur 4 - einer speziellen Bauart - befindet sich der exzenterinduzierte Antrieb der Hülse 38, d.h. ein Untersetzungsgetriebe, am äußeren freien Ende der Hülse in der Hülse und wird die Amplitude mittels einer exzentrischen dreh- und feststellbaren dünnwandigen Hülse 39 festgelegt und kann z.B. zum konventionellen Fräsen bis auf 0 gestellt werden - bei kraftschlüssiger Verbindung der Welle 37 mit der Hülse 38 z.B. mit einem Stift 36. 39 ist die dünnwandige dreh- und feststellbare Hülse zur wahlweise Einstellung der Amplitude von max bis 0; das Feststellen kann hierbei z.B. über 40 erfolgen. 41 sind gemäß Figur 1 der Außenzahnkranz, der in dem exzentrisch rotierenden Innenzahnkranz 42 abläuft. Beim Umstellen von einer Amplitude auf die andere müssen dann der Außenzahnkranz 41 auf den Innenzahnkranz 42 abgestimmt werden - durch Auswechseln wenigstens eines Zahnkranzes. Dies geschieht innerhalb von Minuten - inkl. Verstellung der Amplitude und Neuauswuchtung. Hierdurch kann die Amplitude optimal auf das jeweils zu bearbeitende Material ein- / umgestellt werden. Die Antriebswelle 37 ist bei dieser besonders vorteilhaften und erfindungsgemäßen Bauart im Antriebsbereich zentrisch angeordnet, schwingt nicht und überlastet damit ihre Lagerung nicht und kann somit auch zentrisch gebremst angetrieben werden und / oder zentrisch kraftrückübertragend genutzt werden - als Alternative zur Figur 1 mit Anspruch 9.

Die Bauart gemäß Figur 4 kann auch als einseitig gehaltenes fliegend gelagertes, exzenterinduziertes selbständig drehendes Rollenbohrwerkzeug (mit Disken oder gl.) fungieren; dies geschieht unter Wegfall der Welle 37 und Zahnräder 41 und 42 - es bringt u.a. den Vorteil der schnelleren Auswechselbarkeit der eigentlichen Bohrwerkzeuge.

## Patentansprüche

1. Verfahren zum Bearbeiten von Material mittels mindestens einem exzenteraktivierten, radial schlagend rotierenden Werkzeug mit einer schnellaufend angetriebenen Exzenterwelle (3) und mindestens einer langsam laufenden oder ablaufenden Hülse (1) mit Werkzeugen, wobei die Hülse (1) auf der Exzenterwelle (3) frei dreht, dadurch gekennzeichnet, daß die Hülse (1) exzenterinduziert angetrieben wird, entweder bei Auftreffen auf das Material oder über ein exzenterinduziertes Untersetzungsgetriebe (10, 11; 22, 23; 41, 42).

2. Vorrichtung zum Bearbeiten von Material mit mindestens einem exzenteraktiviertem, radial schlagend rotierendem Werkzeug mit einer schnellaufend angetriebenen Exzenterwelle (3) und mindestens einer langsam laufenden oder ablaufenden Hülse (1) mit Werkzeugen, wobei die Hülse (1) auf der Exzenterwelle (3) frei drehend angeordnet ist, dadurch gekennzeichent, daß die Hülse (1) exzenterinduziert angetrieben ist, entweder bei Auftreffen auf das Material oder über ein exzenterinduziertes Untersetzungsgetriebe (10, 11; 22, 23; 41, 42).

3. Vorrichtung nach Anspruch 2, gekennzeichnet durch ein Untersetzungsgetriebe (10, 11; 41, 42), das zwischen der langsam laufenden oder ablaufenden Hülse (1) mit Werkzeugen und einer die Hülse (1) antreibenden Welle (5) angeordnet ist.

4. Vorrichtung nach Anspruch 2, gekennzeichnet durch ein Untersetzungsgetriebe (22, 23), das zwischen einem Halter (25) und der Hülse (1) mit Werkzeugen angeordnet ist.

5. Vorrichtung nach einem der Ansprüche 2 und 4, gekennzeichnet durch eine mit Fräswerkzeugen versehene Hülse (1).

6. Vorrichtung nach einem der Ansprüche 2 bis 5, gekennzeichent durch einseitige Halterung und / oder Lagerung der Exzenterwelle (3) mit Hülse (1) und gleichseitigem Antrieb der Hülse (1) und Exzenterwelle (3). [Figur 2]

7. Vorrichtung nach Anspruch 3 oder 4, gekennzeichnet dadurch, daß für den Antrieb der Hülse (1) eine Welle (5) durch die Exzenterwelle (3) geführt ist. [Figur 1 und 4]

8. Vorrichtung nach Anspruch 6 , gekennzeichent dadurch, diese Welle (5) an ihrem äußeren freien Ende zu blockieren - die Drehzahl der hiermit angetriebenen Hülse (1) über eine Bremse zu reduzieren - oder über einen Motor zu erhöhen. [Figur 1 und 4]

9. Vorrichtung nach einem der Ansprüche 2 bis 8, gekennzeichnet durch ein Untersetzungsgetriebe (10, 11; 22, 23; 41, 42), das aus einem Zahnrad (11,41) besteht, das in einem gehaltenen Innenzahnkranz (10, 42) exzentrisch abläuft bzw. aus einem Innenzahnkranz (22), der um ein gehaltenes Zahnrad (23) exzentrisch abläuft. [Figur 1, 2 und 4]

10. Vorrichtung nach einem der Ansprüche 4 bis 9, gekennzeichnet durch eine mechanische und / oder hydraulische Kraftrückübertragung (14 - 18) vom Untersetzungsgetriebe (10, 11) auf die Exzenterwelle (3) bei gleichzeitiger Wähl- und / oder Einstellbarkeit der jeweils optimalen Drehzahl für das Fräs- oder Rollenbohrwerkzeug. [Figur 1]

11. Vorrichtung nach einem der Ansprüche 2 bis 10, gekennzeichent durch Einstellbarkeit der Amplitude bis auf 0 durch Verdrehen einer exzentrischen Hülse (39). [Figur 4]

12. Vorrichtung nach einem der Ansprüche 2 bis 11, dadurch gekennzeichnet, daß an der Exzenterwelle (3) mindestens ein Gegengewicht (4) angeordnet ist.

13. Vorrichtung nach Anspruch 12, dadurch gekennzeichnet, daß das mindestens eine Gegengewicht (4) justierbar ist.

14. Vorrichtung nach Anspruch 12 oder 13, dadurch gekennzeichnet, daß die Vorrichtung durch mindestens ein Gegengewicht (4) dynamisch auswuchtbar ist.

15. Verwendung der Vorrichtung nach einem der Ansprüche 2 bis 14 beim Pilot-, Großloch-, Schacht- und / oder Tunnelbau.

## Claims

1. Method of working material by means of at least one eccentrically activated, radially percussive rotating tool having a rapidly rotating, propelled eccentric drive shaft (3) and at least one slowly running or engaging sleeve (1) with tools, the sleeve (1) being freely rotatable on the eccentric drive shaft (3), characterised in that the sleeve (1) is driven by eccentric induction, either on impact with the material, or by way of an eccentrically induced drive train (10, 11; 22, 23; 41, 42).

2. Apparatus for working material by means of at least one eccentrically activated, radially percussive rotating tool having a rapidly rotating propelled drive shaft (3) and at least one slowly rotating or engaging sleeve (1) having tools, the sleeve (1) being arranged in freely rotatable relationship to the eccentric drive shaft (3), characterised in that the sleeve (1) is driven by eccentric induction, either on impact with the material, or by way of an eccentrically induced gear train (10, 11; 22, 23; 41, 42).

3. Apparatus according to claim 2, characterised in that a reducing gear train (10, 11; 41, 42) is arranged between the rapidly rotating or engaging sleeve (1) having tools and a drive shaft (5) driving the sleeve (1).

4. Apparatus according to claim 2, characterised in that a reducing gear train (22, 23) is arranged between a holder (25) and the sleeve (1) having tools.

5. Apparatus according to one of the claims 2 and 4, characterised by a sleeve (1) having milling tools.

6. Apparatus according to one of the claims 2 to 5, characterised by one-sided fastening and / or bearing support for the eccentric drive shaft (3) and sleeve (1), and same-sided propulsion of the sleeve (1) and eccentric drive shaft (3) [figure 2].

7. Apparatus according to claim 3 or 4, characterised in that a shaft (5) for propelling the sleeve (1) extends through the eccentric drive shaft (3) [figure 1 and 4].

8. Apparatus according to claim 6, characterised by blocking this shaft (5) at its remote free end, in order to reduce the rate of rotation of the sleeve (1) being propelled in this manner by way of a brake, or to increase it by way of a motor [figure 1 and 4].

9. Apparatus according to one of the claims 2 to 8, characterised by a reducing gear train (10, 11; 22, 23; 41, 42) comprising a spur gear (11, 41) meshing in eccentric relationship with a locked internal ring gear (10, 42), or respectively an internal ring gear (22) meshing in eccentric relationsip with a locked spur gear (23) [figures 1, 2 and 4].

10. Apparatus according to one of claims 4 to 9, characterised by a mechanical and / or hydraulic reverse transfer of torque (14 - 18) from the reducing gear train (10, 11) to the eccentric drive shaft (3) while simultaneously maintaining the choice and adjustability of the respective optimum rate of rotation for the milling or roller drilling tool [figure 1].

11. Apparatus according to one of the claims 2 to 10, characterised by the adjustability of the amplitude down to 0 by rotation of an eccentric sleeve (39) [figure 4].

12. Apparatus according to one of the claims 2 to 11, characterised in that at least one counterweight (4) is secured to the eccentric drive shaft (3).

13. Apparatus according to claim 12, characterised in that at least one of the counterweights (4) is adjustable.

14. Apparatus according to claim 12 or claim 13, characterised in that the apparatus permits dynamic balancing by way of at least one counterweight (4).

15. Use of the apparatus according to one of the claims 2 to 14 in pilot hole, larger-diameter hole, shaft and / or tunnel excavations.

## Revendications

1. Méthode d'usinage de matériaux au moyen d'au moins un outil rotatif à battement radial activé par excentrique comportant un arbre à excentrique (3) entraîné à vitesse rapide et au moins une douille (1) tournant ou circulant lentement et dotée d'outils, la douille (1) tournant librement sur l'arbre à excentrique (3), caractérisé en ce que la douille (1) est entraînée par induction excentrique, soit lors de son impact sur le matériau soit par l'intermédiaire d'un démultiplicateur à induction excentrique (10, 11; 22, 23; 41, 42).

2. Dispositif d'usinage de matériaux comportant au moins un outil rotatif à battement radial activé par excentrique comportant un arbre à excentrique (3) entraîné à vitesse rapide et au moins une douille (1) tournant ou circulant lentement comportant des outils, la douille (1) étant disposée sur l'arbre à excentrique (3) de manière à tourner librement, caractérisé en ce que la douille (1) est entraînée par induction excentrique, soit lors de son impact sur le matériau soit par l'intermédiaire d'un démultiplicateur à induction excentrique (10, 11; 22, 23; 41, 42).

3. Dispositif selon la revendication 2, caractérisé par un démultiplicateur (10, 11; 41, 42) disposé entre la douille (1) tournant ou circulant lentement comportant des outils et un arbre (5) entraînant la douille (1).

4. Dispositif selon la revendication 2, caractérisé par un démultiplicateur (22, 23) disposé entre un support (25) et la douille (1) comportant des outils.

5. Dispositif selon l'une des revendications 2 et 4, caractérisé par une douille (1) équipée d'outils de fraisage.

6. Dispositif selon l'une des revendications 2 à 5, caractérisé par un support et/ou un logement unilatéral de l'arbre à excentrique (3) avec une douille (1) et entraînement simultané de la douille (1) et de l'arbre à excentrique (3). [Figure 2].

7. Dispositif selon les revendications 3 ou 4, caractérisé en ce que pour l'entraînement de la douille (1) un arbre (5) est guidé à travers l'arbre à excentrique (3) [Figures 1 et 4].

8. Dispositif selon la revendication 6, caractérisé par le blocage de cet arbre (5) à son extrémité libre extérieure, la réduction par un frein de la vitesse de rotation de la douille (1) ainsi entraînée ou son augmentation au moyen d'un moteur [Figures 1 et 4].

9. Dispositif selon l'une des revendications 2 à 8, caractérisé par un démultiplicateur (10, 11; 22, 23; 41, 42) constituée d'une roue dentée (11, 41), circulant excentriquement dans une couronne dentée intérieure (10, 42) supportée ou constituée d'une couronne dentée intérieure (22) qui circule excentriquement autour d'une roue dentée supportée (23) [Figures 1, 2 et 4].

10. Dispositif selon l'une des revendications 4 à 9, caractérisé par une retransmission des forces mécanique ou hydraulique (14 - 18) du démultiplicateur (10, 11) à l'arbre à excentrique (3) tout en ayant la possibilité de choisir et/ou de régler la vitesse de rotation optimale dans chaque cas pour l'outil de fraisage ou de forage à molettes. [Figure 1].

11. Dispositif selon l'une des revendications 2 à 10, caractérisé par la possibilité de régler l'amplitude jusqu'à 0 par torsion d'une douille excentrique (39). [Figure 4].

12. Dispositif selon l'une des revendications 2 à 11, caractérisé en ce qu'au moins un contrepoids (4) est disposé sur l'arbre à excentrique (3).

13. Dispositif selon la revendication 12, caractérisé en ce qu'au moins un contrepoids (4) est ajustable.

14. Dispositif selon la revendication 12 ou 13, caractérisé en ce que le dispositif peut être équilibré dynamiquement par au moins un contrepoids (4).

15. Utilisation du dispositif selon l'une des revendications 2 à 14 pour le forage de trous pilotes, de grands trous, la construction de puits et/ou de tunnels.
